## Europäisches Patentamt
## European Patent Office
## Office européen des brevets

(11) Veröffentlichungsnummer: **0 410 200 A1**

# EUROPÄISCHE PATENTANMELDUNG

(21) Anmeldenummer: 90113125.0

(22) Anmeldetag: 10.07.90

(51) Int. Cl.5: **B01D 53/36**, F01N 3/28, B01J 35/04, B01D 46/24

(30) Priorität: 12.07.89 DE 3922910
12.07.89 DE 3922909

(43) Veröffentlichungstag der Anmeldung:
30.01.91 Patentblatt 91/05

(84) Benannte Vertragsstaaten:
AT BE CH DE DK ES FR GB GR IT LI LU NL SE

(71) Anmelder: SINTERMETALLWERK KREBSÖGE GMBH
Krebsöge 13-15
D-5608 Radevormwald(DE)

(72) Erfinder: Röhling,Rainer
An der Lohmühle 5
D-5608 Radevormwald(DE)
Erfinder: Gestwa, Hans-Jürgen
Saarbrücker Strasse 14
D-5630 Remscheid 1(DE)
Erfinder: Sicken, Reinhold
Wiesenstrasse 4
D-5489 Sierscheid(DE)
Erfinder: Fischer, Axel
Keplerstrasse 35
D-4300 Essen 1(DE)

(74) Vertreter: Langmaack, Jürgen, Dipl.-Ing. et al
Patentanwälte Maxton . Maxton . Langmaack
Goltsteinstrasse 93 Postfach 51 08 06
D-5000 Köln 51(DE)

(54) Durchlässig-poröser Körper zur Behandlung von Gasen und/oder Dämpfen und/oder Flüssigkeiten und Verfahren zu seiner Herstellung.

(57)
2.1 Für Katalysatoren und Filter zur Behandlung von Gasen, Dämpfen oder Flüssigkeiten, beispielsweise der Abgase von Verbrennungsmotoren wurden bisher poröse Keramikkörper verwendet. Diese sind stoßempfindlich und sind wegen der schlechten Wärmeleitfähigkeit des keramischen Materials beim Abbrand der Rußablagerungen durch Überhitzung bis zur thermischen Zerstörung gefährdet.

2.2 Durch die Verwendung eines Körpers aus einem durchlässig-porösen Sintermetall, das die katalytisch wirkenden Bestandteile mindestens zum Teil enthalten kann, ergibt sich nicht nur eine höhere Festigkeit, die konstruktive Vorteile bildet, sondern auch verbesserte Betriebseigenschaften.

Aufgrund der besseren Wärmeleitfähigkeit im Vergleich zu keramischem Material setzt beispielsweise bei der Verwendung als Rußfilter der Zündvorgang früher ein. Dadurch wird der Abbrand der Rußablagerung vergleichmäßigt.

## DURCHLÄSSIG-PORÖSER KÖRPER ZUR BEHANDLUNG VON GASEN UND/ODER DÄMPFEN UND/ODER FLÜSSIGKEITEN UND VERFAHREN ZU SEINER HERSTELLUNG

Die Erfindung betrifft einen Körper aus einem porösen Werkstoff zur Behandlung von den Körper durchströmenden Gasen und/oder Dämpfen und/oder Flüssigkeiten.

Bei der Behandlung von Gasen unter Ausnutzung der katalytischen Wirkung bestimmter Stoffe können neben losen Schüttungen auch poröse keramische Körper in entsprechender Zusammensetzung verwendet werden. Lose Schüttungen werden in erster Linie im industriellen Bereich bei hohen Volumendurchsätzen angewendet, während keramische Körper bei kleineren Voluemndurchsätzen schon aus herstellungtechnischen Gründen Anwendung finden können. Da bei katalytischen Prozessen je nach Ablauf der chemischen Reaktion entweder Wärme frei wird oder Wärme benötigt wird, weisen Schüttungen, insbesondere aber poröse keramische Körper infolge der geringen Wärmeleitfähigkeit des Materials erhebliche Nachteile auf.

Für einen speziellen Anwendungsfall, nämlich der Behandlung von Dieselabgasen, ist aus der EP-A-56 584 ein Rußfilter für die Behandlung von Dieselabgasen bekannt, der aus einem porösen, monolithischen Keramikkörper besteht. Dieser Keramikkörper weist eine Vielzahl parallel zueinander verlaufender dünnwandiger Kanäle auf, die jeweils an den als Gaseinlaß bzw. Abgasauslaß dienenden Stirnseiten nach einem Schachbrettmuster verschlossen bzw. offen sind, wobei jeder Kanal ein offenes und ein verschlossenes Ende aufweist. Beim Abbrand des in einem derartigen Filterkörper angesammelten Rußes können unter bestimmten Betriebsbedingungen so hohe Temperaturen entstehen, daß die Schmelztemperatur des Keramikmaterials erreicht oder sogar überschritten wird und der Keramikkörper zusammenschmilzt und damit die gesamte Filtereinrichtung unbrauchbar wird.

Diesen Nachteil hat man mit einer Vorrichtung gemäß EP-B-86 367 dadurch zu verbessern versucht, daß man in einen porösen Keramikkörper Kanäle mit größerem Querschnitt angeordnet hat, in die mit katalytisch wirkenden Materialien beschichtete und in Form gebrachte Metallfäden eingeschoben sind. Hierdurch soll ein gleichmäßiger Abbrand der ausgefilterten Rußteilchen erfolgen, so daß die vorstehend beschriebenen Temperaturüberschreitungen vermieden werden.

In beiden Fällen muß jedoch für den rein mechanischen Filtervorgang auf poröse Keramikkörper zurückgegriffen werden. Dies hat jedoch beim Einbau derartiger Filtereinrichtungen in Kraftfahrzeugen Nachteile, da ein erheblicher Konstruktionsaufwand betrieben werden muß, um den stoßempfindlichen keramischen Filterkörper so in die Abgasleitung einzubauen, daß er nicht durch die im Betrieb unvermeidbaren Stöße und Erschütterungen beschädigt oder gar zerstört wird.

Der Erfindung liegt nun die Aufgabe zugrunde, einen Körper der eingangs bezeichneten Art mit verbesserten mechanischen und/oder strukturellen Eigenschaften und/oder Anwendungsmög lichkeiten zu schaffen.

Diese Aufgabe wird erfindungsgemäß dadurch gelöst, daß der durchströmungsfähige Teil des Körpers aus einem durchlässig porösen Sintermetall besteht. Ein derartiger aus porösem Sintermetall hergestellter, insbesondere monolithischer Körper weist eine sehr viel höhere mechanische Festigkeit als vergleichbare Keramikkörper auf. Damit ergibt sich eine sehr viel einfachere Konstruktion für einen derartigen als Gasfilter oder als Gaskatalysator verwendbaren Körper, da dieser selbsttragend ist und wie ein metallisches Formteil verarbeitet, beispielsweise durch einen Schweißvorgang befestigt oder aus mehreren Einzelkörpern zu einem größeren Bauteil zusammengeschweißt werden kann. Dies ist beispielsweise für die industrielle Anwendung von Bedeutung. Ein weiterer Vorteil besteht darin, daß derartige Sintermetallkörper nicht nur formgenau hergestellt werden können, sondern auch noch bearbeitbar sind, so daß wegen der geringen Maßdifferenzen die Montage vereinfacht wird. Ein weiterer betriebstechnischer Vorteil von Körpern aus einem durchlässig-porösen Sintermetall ergibt sich aus der besseren Wärmeleitfähigkeit eines Metalls gegenüber einer Schüttung oder einem porösen Körper aus Keramik, so daß beispielsweise bei der Verwendung als Katalysator bei Katalyseprozessen sowohl etwa freiwerdende Wärmemengen abgeleitet oder für den Prozeß notwendige Wärmemengen zugeführt werden können. Die günstigen Wärmeleiteigenschaften ermöglichen somit die Einhaltung eines vorgegebenen Temperaturniveaus, das bei entsprechender Auslegung in etwa im ganzen Körper gleichmäßig eingehalten werden kann.

Erfindungsgemäß kann die Porosität des Körpers zwischen 20 und 80%, also in weiten Grenzen eingestellt werden. Hierdurch kann unmittelbar auf die Durchlässigkeit Einfluß genommen werden. Beim Einsatz als Katalysatoren wird man eine möglichst hohe Porosität und beim Einsatz als Filter wird man eine auf die abzuscheidende Partikelgröße abgestellte gerin gere Prorosität wählen. Eine bevorzugte Porosität liegt zwischen 40 und 60%.

Diese Porosität wird durch eine entsprechende Auswahl der Kornspektrums der zur Herstellung des Körpers eingesetzten Metallpulvermischung bewirkt. Die Korngröße kann zwischen 50 und 500μ liegen. Durch die Verwendung sogenannter spratziger Pulver läßt sich in diesem Bereich die Porosität ebenfalls beeinflussen. In einer bevorzugten Metallpulvermischung liegen die Korngrößen zwischen 100 und 200μ, was eine Porosität von etwa 50% ergibt bzw. einer Metallpulvermischung mit einem Kornspektrum von 200 bis 300μ, was einer Porosität von etwa 60 bis 65% entspricht. Bei einer Porosität von 40 bis 50% wird der geforderte Abscheidegrad für Rußteilchen bei einem Einsatz von Dieselrußfilter noch eingehalten. Für den Einsatz als Abgaskatalysator ist die höhere Prorosität zweckmäßig, da hier der Durchlaßwiderstand dann geringer ist.

Hinsichtlich der stofflichen Zusammensetzung haben sich Pulvermischungen auf der Basis von Chrom, Nickel und Eisen als vorteilhaft erwiesen. So im wesentlichen folgende Zusammensetzung:

    a) Cr 15%, Ni 75%, Rest Fe
    b) Cr 21%, Ni 61%, Mo 9%, Rest Fe
    c) Cr 16%, Ni 35%, Cu 3%, Rest Fe.

Zusätzlichen zu diesen, den Körper bildenden Grundwerkstoffen, die hinsichtlich der Anteile an Chrom und Nickel auch für den vorgesehenen Einsatzzweck katalytische Eigenschaften besitzen, können den Pulvermischungen noch andere katalytisch wirkende Stoffe, wie sie als Katalysatoren für die Oxidation brennbarer Bestandteile in Abgasen von Verbrennungsmotoren bekannt sind, zugefügt werden oder auf die Körper zusätzlich, beispielsweise durch Aufdampfen dieser Stoffe, aufgebracht werden. Die vorstehend angegebenen Pulvermischungen werden vorzugsweise als legierte Pulver eingesetzt. Hierdurch ist einmal eine gute Sintereigenschaft gewährleistet. Zum anderen ist die katalytische Eigenschaft und die Korrosionsbeständigkeit gegenüber aggressiven Bestandteilen in den Abgasen gegeben. Zusätzlich können zu dem legierten Pulver noch pulverförmige Anteile an Stoffen, insbesondere Metalle und/oder Metallmischungen zugegeben werden, die die für den vorgesehenen Einsatzzweck spezielle katalytischen Wirkungen besitzen. Diese Anteile müssen jedoch auch hinsichtlich ihrer Eignung für das Sinterverfahren ausgewählt werden, d.h. einen Schmelzpunkt im Bereich oder über dem Schmelzpunkt der Grundpulvermischung besitzen.

Die Vorteile eines derartigen Körpers werden auch bei einer kombinierten Anwendung als Katalysator und Filter deutlich, beispielsweise bei der Verwendung als Dieselrußfilter, da hier die durch die katalytischen Bestandteile vorgegebene, abgesenkte Zündtemperatur sehr viel schneller erreicht wird, so daß es schon bei dünnen Rußschichten zu einem Abbrand der ausgefilterten Rußteile kommt. Dies hat außerdem unmittelbar zur Folge, daß die Ablagerungsdichte geringer ist und somit auch eine hohe Gasdurchlässigkeit und dementsprechend ein geringerer Durchströmwiderstand gegeben ist. Zugleich ergibt sich eine relativ große Länge der "Strömungskanäle" im Sintermetall, so daß eine sichere Abscheidung auch kleinster Teilchen beim Einsatz als Dieselrußfilter und eine große Berührungsfläche für das zu behandelnde Abgas beim Einsatz als Katalysator gewährleistet ist. Ein weiterer Vorteil des aus porösem Sintermetall bestehenden Körper liegt darin, daß bei entsprechendem Kornspektrum des Ausgangspulvers die Außenflächen des Körpers, rauh sind, so daß sich hier bessere Wärmeleiteigenschaften und damit eine verbesserte Wirkungsweise ergeben.

Ein weiterer Vorteil besteht darin, daß der bei keramischen katalytisch oder als Filter wirkenden Körpern gefürchtete Wärmestau, beispielsweise beim Abbrand der Rußschicht infolge der besseren Wärmeleitung eines metallischen Filterkörpers vermieden wird, da wegen der guten Wärmeleitfähigkeit der Körper aus Sintermetall die bei dem in der Regel in einem begrenzten Bereich erfolgenden Abbrand der Dieselrußablagerungen frei werdenden Wärmemengen schneller an den Abgasstrom und vor allem an die benachbarten Bereiche des Körpers abgegeben werden, so daß der Abbrennvorgang sich schneller in der Fläche ausdehnt und somit insgesamt vergleichmäßigt wird. Ein weiterer Vorteil besteht darin, daß die Metallpulvermischung zur Herstellung eines derartigen Sintermetallkörpers bereits so zusammengesetzt werden kann, daß bereits in der Metallpulvermischung weitgehend solche Metalle und Metalloxide enthalten sind, die als Katalysatoren eine Senkung der Zündtemperatur der ausgefilterten Dieselrußteilchen und/oder eine Verbrennung gasförmiger Schadstoffe fördern.

In vorteilhafter Ausgestaltung der Erfindung ist vorgesehen, daß die Porosität, bezogen auf die Strömungsrichtung des zu behandelnden Gases, eintrittsseitig anders ist als austrittsseitig. Hierdurch kann insbesondere bei katalytischen Prozessen auf den Strömungsverlauf Einfluß genommen werden. Bei Volumenzunahme muß die größere Porosität austrittsseitig vorhanden sein. Bei Volumenverminderung muß die Anordnung umgekehrt getroffen werden. Bei der Verwendung als Dieselrußfilter muß die größere Porosität eintrittsseitig vorhanden sein, um die Teilchen möglichst tief eindringen zu lassen, so daß der Abbrand vergleichmäßigt wird.

Zur Vereinfachung der Herstellung dieses durchlässig-porösen Sintermetallkörpers ist es zweckmäßig, wenn dieser aus wenigstens zwei fest zusammengesinterten Schichten unterschiedlicher Porosität zusammengesetzt ist, so daß sich die Porosität stufenweise ändert.

In zweckmäßiger Ausgestaltung der Erfindung ist für den Einsatz als Katalysator vorgesehen, daß das Sintermetall zumindest zum Teil aus katalytisch wirkendem Material zusammengesetzt ist. Besonders vorteilhaft ist es jedoch, wenn das katalytisch wirkende Material als Schicht auf das die Porenkanäle begrenzende Grundmaterial zumindest im Oberflächenbereich des porösen Körpers aufgebracht ist. Dies kann durch Aufdampfen oder Aufsintern erfolgen. Beim Aufsintern können hier die Porenkanäle des porösen Körpers insgesamt oder auch schichtweise mit einer entsprechenden Beschichtung versehen werden, so daß bei der katalytischen Behandlung von feststofffreien Gasen und/oder Dämpfen die Leistung verbessert werden kann.

In einer anderen Ausgestaltung der Erfindung ist vorgesehen, daß in dem aus durchlässig-porösem Sintermetall bestehenden Teil des Körpers wenigstens ein Kanal mit undurchlässiger Wand angeordnet ist. Hierdurch wird es möglich, durch gezielte Wärmezufuhr oder Wärmeabfuhr den katalytischen Prozeß innerhalb des Sinterkörpers auch bei großen Körpern zu beeinflussen. Der Kanal kann als Rohr in den Metallpulverformling mit eingeformt werden, so daß der Körper durch den Sintervorgang auf das Rohr "aufgeschrumpft" wird und eine gut wärmeleitende Verbindung gegeben ist.

In weiterer Ausgestaltung der Erfindung ist vorgesehen, daß der Körper als monolithischer Körper ausgebildet ist und mehrere den Körper vorzugsweise parallel zueinander durchlaufende Kanäle aufweist. Besonders zweckmäßig ist es, daß die Breite der vorzugsweise einen quadratischen Querschnitt aufweisenden Kanäle mindestens etwa der Wandstärke der jeweils zwei benachbarte Kanäle trennenden Zwischenwände beträgt. Hierdurch ergibt sich insbesondere für solche Anwendungsfälle, bei denen die zu behandelnden Abgase entweder gefiltert werden müssen oder bei denen zur Erhöhung der Verweilzeit auf der katalytisch wirkenden Fläche das Abgas die Zwischenwände durchströmt, eine günstigere Einwirkung auf die Abgase einerseits, zugleich aber ein monolithischer Körper mit hoher Festigkeit andererseits.

Da der aus porösem Sintermetall bestehende Körper eine hohe mechanische Festigkeit aufweist, ist es möglich, ihn selbsttragend in ein Gehäuse einzubauen, beispielsweise so, daß der Körper mit einem Ende starr in einer Gehäusewand und mit dem anderen Ende verschiebbar in der anderen Gehäusewand gehalten ist. Damit kann der Körper sich unter wechselnden Temperatureinflüssen frei in seiner Länge dehnen, so daß es hier zu keinen Wärmespannungen kommen kann.

In zweckmäßiger Ausgestaltung bei einem monolithischen Körper, bei dem die Kanäle jeweils abwechselnd an einem Kanalende offen und am anderen Kanalende verschlossen sind, ist erfindungsgemäß vorgesehen, daß der Verschluß des einen Teils der Kanäle durch eine angeformte, die Kanalenden bildende Stirnwand bewirkt wird und am anderen Ende durch eine vorgesetzte Lochplatte gebildet wird. Dies hat den Vorteil, daß der Verschluß der Kanalenden an einer Seite bereits bei der Herstellung, also in einem Arbeitsgang vorgenommen werden kann, während der Verschluß des anderen Endes durch ein zusätzliches Bauteil erfolgt, das zweckmäßigerweise gleichzeitig auch zur Festlegung des Körpers im Gehäuse verwendet werden kann.

In Ausgestaltung der Erfindung ist daher vorgesehen, daß die Lochplatte aus einer gestanzten Blechplatte besteht, bei der die den Verschluß bildenden Bereiche jeweils durch eine in die zugehörigen Kanalöffnungen eingreifende Ausprägung gebildet wird.

Während es grundsätzlich möglich ist, den Körper mit einem Ende durch einen Schweißvorgang an einer Gehäusewand festzulegen, ist in einer besonders vorteilhaften und fertigungstechnisch günstigen Ausgestaltung der Erfindung vorgesehen, daß das mit dem Gehäuse fest zu verbindende Ende des Körpers einen angeformten, umlaufenden Haltebund aufweist. Ein der artiger Haltebund vereinfacht nicht nur die Montage, da schon beim Einsetzen der Körper im Gehäuse zunächst formschlüssig und zentriert gehalten wird. Bei einer Verbindung durch einen Schweißvorgang wird hier das Schweißen vereinfacht. Die Anordnung eines Haltebundes bietet aber auch die Möglichkeit, anstelle einer kostspieligen Schweißverbindung eine einfache Formschlußverbindung zu schaffen, da der Körper über den Haltebund eingeklemmt werden kann. In zweckmäßiger Ausgestaltung ist hierbei vorgesehen, daß zumindest eine Stirnfläche des Haltebundes konisch zulaufend geformt ist. Hierdurch wird die Montage vereinfacht, da bei entsprechend konisch ausgebildeter Anlagefläche am Gehäuse der eingesetzte Körper sich selbst zentrieren und parallel zur Gehäuseachse ausbildet.

Eine Formschlußverbindung kann erfindungsgemäß in der Weise erfolgen, daß der Körper über seinen Haltebund durch einen entsprechenden Andruckring an der zugehörigen Gehäusewand gelegt ist.

In einer anderen Ausführungsform ist erfindungsgemäß vorgesehen, daß der poröse Körper wenigstens einen, an einem Ende geschlossenen Rohrkörper aufweist, der in Strömungsrichtung ausgerichtet in einem Strömungsführungsgehäuse angeordnet ist. Derartige aus Sintermetall hergestellte kerzenförmige Rohrkörper weisen eine sehr viel höhere mechanische Festigkeit auf als keramische Elemente und sind daher beispielsweise besser geeignet für den Einsatz an Dieselmotoren, insbesondere Fahrzeug-Dieselmotoren. Sie können in Mehrfachanordnung parallel zueinander im Strömungsgehäuse angeordnet werden, so daß sich auch auf kleinem Raum ein großer Strömungsquerschnitt durch die porösem Sinterkörper bewerkstelligen läßt. Damit ergibt sich eine sehr viel einfachere Konstruktion für einen derartigen Abgasfilter, da die Rohrkörper selbsttragend sind und wie ein metallisches Formteil verarbeitet, beispielsweise durch einen Schweißvorgang befestigt werden können. Ein weiterer Vorteil besteht darin, daß derartige Sintermetallkörper nicht nur formgenau hergestellt werden können, sondern auch noch bearbeitbar sind, so daß wegen der geringen Maßdifferenzen die Montage vereinfacht wird. Ein weiterer betriebstechnischer Vorteil von Filterkörpern aus einem porösen Sintermetall ergibt sich aus der besseren Wärmeleitfähigkeit eines Metalls gegenüber der Keramik, so daß hier die durch die katalytischen Bestandteile vorgegebene, abgesenkte Zündtemperatur sehr viel schneller erreicht wird, so daß es schon bei dünnen Rußschichten zu einem Abbrand der ausgefilterten Rußteile kommt. Dies hat außerdem unmittelbar zur Folge, daß die Ablagerungsdichte geringer ist und somit auch eine hohe Gasdurchlässigkeit und dementsprechend ein geringerer Durchströmwiderstand gegeben ist. Der besondere Vorteil eines Sintermetallkörpers besteht darin, daß hier eine hohe Porosität mit nahezu 50% und damit ein günstiger Strömungswiderstand erreicht wird. Zugleich ergibt sich eine relativ große Länge der "Strömungskanäle" im Sintermetall, so daß eine sichere Abscheidung auch kleinster Teilchen gewährleistet ist. Ein weiterer Vorteil der aus porösem Sintermetall bestehenden Rohrkörper liegt darin, daß bei entsprechendem Herstellungsprozeß, nämlich durch das Verpressen der Pulvermischung um einen Stahlkern mit Hilfe einer elastischen Manschette die Außenfläche der Rohrkörper rauh ist, so daß sich hier bessere Wärmeleiteigenschaften und damit eine verbesserte Wirkungsweise ergibt.

Da die einzelnen aus porösem Sintermetall bestehenden Rohrkörper eine hohe mechanische Festigkeit aufweisen, ist es möglich, die Rohrkörper selbsttragend in das Gehäuse einzubauen. In einer Ausgestaltung der Erfindung ist daher vorgesehen, daß die Rohrkörper mit wenigstens einem Ende, vorzugsweise mit beiden Enden an Gehäusewandungen befestigt sind. Hierbei ist es besonders zweckmäßig, wenn die Rohrkörper jeweils mit einem Ende starr in der einen Gehäusewand und mit dem anderen Ende verschiebbar in der anderen Gehäusewand gehalten sind. Damit kann jeder Rohrkörper sich unter den wechselnden Temperatureinflüssen frei in seiner Länge dehnen, so daß es hier zu keinen Wärmespannungen kommen kann. Die starre Festlegung erfolgt vorzugsweise am offenen Ende des Rohrkörpers.

Erfindungsgemäß sind die Rohrkörper mit ihrem offenen Ende in einer Gehäusezwischenwand gehalten, in der nur die Rohröffnungen Abgasdurchlässe bilden. Verwendet man zur Befestigung der Rohrkörper wenigstens zwei Gehäusewände, dann ist in erfindungsgemäßer weiterer Ausgestaltung vorgesehen, daß die Rohrkörper im Bereich ihrer geschlossenen Enden in zumindest einer weiteren Zwischenwand gehalten sind, die Durchstecköffnungen für die Rohrkörper und zusätzlich Abgasdurchlaßöffnungen aufweist.

Während es grundsätzlich möglich ist, die Rohrkörper mit ihrem einen Ende durch einen Schweißvorgang an der betreffenden Gehäusezwischenwand festzulegen, ist in einer besonders vorteilhaften und fertigungstechnisch günstigen Ausgestaltung der Erfindung vorgesehen, daß das mit dem Gehäuse fest zu verbindende Ende des Rohrkörpers einen angeformten, umlaufenden Haltebund aufweist. Ein derartiger Haltebund vereinfacht nicht nur die Montage, da schon beim Einsetzen der Rohrkörper in entsprechende Bohrungen der betreffenden Gehäusewandung diese zunächst formschlüssig gehalten sind. Bei einer Verbindung durch einen Schweißvorgang wird hier das Schweißen vereinfacht, so daß beispielsweise auch mechanisierte Schweißvorgänge nach Art eines Abbrennstumpfschweißens oder dgl. eingesetzt werden können. Die Anordnung eines Haltebundes bietet aber auch die Möglichkeit, anstelle einer kostspieligen Schweißverbindung eine einfache Formschlußverbindung zu schaffen, da die Rohrkörper über den Haltebund eingeklemmt werden können. In zweckmäßiger Ausgestaltung ist hierbei vorgesehen, daß zumindest eine Stirnfläche des Haltebundes konisch zulaufend geformt ist. Hierdurch wird die Montage vereinfacht, da bei entsprechend konisch ausgebildeten Durchgangsbohrungen die eingesetzten Rohrkörper sich selbst zentrieren und parallel zueinander ausrichten.

Eine Formschlußverbindung kann erfindungsgemäß in der Weise erfolgen, daß die Rohrkörper über ihren Haltebund durch eine, mit entsprechenden Öffnungen versehene Andruckplatte in der zugehörigen Gehäusezwischenwand festgelegt sind.

In weiterer vorteilhafter Ausgestaltung der Erfindung ist vorgesehen, daß jeweils die Außenfläche der Rohrkörper an mindestens einem Ende durch eine vorzugsweise mechanische Bearbeitung geglättet ist. Hier wird bevorzugt das Ende des Rohrkörpers geglättet, das verschiebbar in einer Gehäusezwischenwand gehalten ist, so daß hier eine einwandfreie Dehnungsmöglichkeit unter Temperatureinfluß gegeben ist.

In weiterer Ausgestaltung der Erfindung ist vorgesehen, daß wenigstens das mit einem Haltebund versehene Ende des Rohrkörpers eine andere, auf erhöhte Festigkeit abgestellte Materialzusammensetzung besitzt. Auch bei dieser Ausgestaltung zeigt sich der Vorteil der Verwendung eines metallischen Sinterwerkstoffes für derartige poröse Körper. Die Möglichkeiten des Herstellungsverfahrens erlauben es, beispielsweise für das Befestigungsende des Rohrkörpers eine dichtsinternde und damit mechanisch hochbelastbare Pulvermischung einzugeben, an die sich dann eine Pulvermischung anschließt, die die gewünschten Porositätsbedingungen erfüllt.

Als Verfahren zur Herstellung von porösen Körpern aus Sintermetall, insbesondere monolithischen Körpern mit mehreren, vorzugsweise parallel verlaufenden Kanälen, ist erfindungsgemäß vorgesehen, daß in eine der Außenkontur des Körpers entsprechenden Form, deren Innenwandung mit den zu formenden Kanälen entsprechenden Formelementen versehen ist, durch eine Öffnung eine schüttfähige Metallpulvermischung mit einem Kornspektrum zwischen 50 und 500µ, vermischt mit max. 2% (Gewichtsprozente) phenolhaltiger Kunstharzflüssigkeit, mittels Druckluft eingeblasen, vorzugsweise eingeschossen wird, daß anschließend die gefüllte Form mit einem katalytisch wirkenden Mittel zum Aushärten des Kunstharzes versetzt wird und danach der Formling ausgeformt und gesintert wird. Mit einem derartigen Verfahren ist es möglich, einen porösen Formling mit komplizierter Außenkontur und/oder mit verhältnismäßig dünner Wandstärke herzustellen, der nach dem Ausformen ohne Schwierigkeiten handhabbar und sinterbar. Das Verfahren erlaubt es auch, bei entsprechend längsteilbarer Form einen am Außenumfang umlaufenden Haltebund anzuformen. Die beim Einblasen, insbesondere aber beim Einschießen des Metallpulvers in die Form bewirkte Verdichtung des Metallpulvers bei gleichzeitiger Abfuhr der im Formraum enthaltenen Luft, gewährleistet eine gleichmäßige Kornverteilung, so daß sowohl über die Länge als auch über den Querschnitt eine im wesentlichen gleichmäßige Porosität erzielt wird. Überraschend hat sich hierbei gezeigt, daß der so hergestellte Formling ohne Hilfs- oder Stützform dem Sinterprozeß unterworfen werden kann. Das Formverfahren erlaubt es ferner, jede beliebige Querschnittsform sowohl für die Kanäle als auch für die Außenkontur eines derartigen monolithischen Körpers vorzusehen. So können neben Kreisquerschnitten auch ovale bzw. elliptische oder auch eckige, beispielsweise rechteckige Querschnitte hergestellt werden. Durch satzweises Einblasen von Metallpulvern mit unterschiedlichen Kornspektren läßt sich ein schichtweiser Aufbau des Formlings mit unterschiedlicher Porosität bewirken.

Soll der Sintermetallkörper Kanäle mit undurchlässiger Wandung enthalten, so werden als Formelemente entsprechend geformte Rohre lösbar mit der Form verbunden, die zusammen mit dem Formling herausgenommen werden und den Sinterprozeß mit durchlaufen, so daß sie in den porösen Sintermetallkörper fest eingebunden sind. Das Blas- bzw. Schießverfahren zum Einbringen des mit Kunstharzflüssigkeit versetzten Metallpulvers erlaubt es hierbei, auch komplizierte Rohrformen, beispielsweise eine Rohrschlange einzuformen.

Die Metallpulvermischung, für deren Zusammensetzung eingangs Beispiele angegeben sind, wird nun unter Druck in eine topfartige Form eingebracht. Das Einbringen kann beispielsweise so erfolgen, daß in einem Vorratsbehälter die Metallpulvermischung fluidisiert und dann mit Hilfe eines Druckluftstrahles in die Form eingeblasen wird. Da jedoch beim Fluidisieren die Gefahr des Entmischens besteht, ist es zweckmäßig, wenn die Metallpulvermischung in die topfartige Form eingeschossen wird. Dies geschieht in der Weise, daß die zu formende Metallpulvermenge in einen mit der zu füllenden Form verbundenen Vorbehälter eingebracht wird, der dann mit Preßluft beaufschlagt wird und aufgrund der schlagartigen Entspannung die im Vorbehälter enthaltenen Metallpulvermenge mit hoher Geschwindigkeit in die Form einschießt. Die Form selbst wird hierbei nicht durch den Preßluftdruck beaufschlagt. Die in der Form enthaltene atmosphärische Luft wird durch entsprechende Entlüftungsöffnungen bzw. Entlüftungskanäle abgeführt.

Da in die Metallpulvermischung max. 2% (Gewichtsprozente) phenolhaltiges Kunstharz in flüssiger Form eingearbeitet ist, wird die gefüllte Form mit einem katalytisch wirkenden Mittel, beispielsweise mit tertiärem Amin bedämpft, so daß das Kunstharz aushärtet. Das ausgehärtete Kunstharz hält nun die einzelnen Metallteilchen fest zusammen, so daß die Form geöffnet und der Formling herausgenommen werden kann. Die Festigkeit ist hierbei so hoch, daß der Formling ohne Schwierigkeiten für die nachfolgenden Bearbeitungsgänge bearbeitet werden kann. Bei der Verwendung sogenannter spratziger Pulver werden die einzelnen Metallpulverteile nicht nur durch die ausgehärteten, Kunstharzteilchen zusammengehalten werden, sondern bei dem vorstehend beschriebenen Einschießverfahren auch mechanisch "verklammert". Dies hat zur Folge, daß der Formling in der üblichen Weise, beispielsweise in einer Einbettung gesintert werden kann, vorzugsweise im Vakuum gesintert werden kann. Es ist möglich, derartige Formkörper mit hoher Maßgenauigkeit herzustellen.

Das erfindungsgemäße Verfahren erlaubt in einer weiteren Ausgestaltung ein besondees vorteilhaftes Einbringen der katalytisch wirkenden Bestandteile. Hierbei werden diese Bestandteile der Kunstharzflüssigkeit zugemischt, so daß die Metallpulvermischung selbst diese Bestandteile nicht enthält. Die katalytisch wirkenden Bestandteile befinden sich somit nach dem Formvorgang in der Kunstharzschicht jeweils auf der Oberfläche der Metallpartikel. Beim Sintern wird der Kunstharz ausgetrieben, während die katalytisch wirkenden Bestandteile auf die die Porenkanäle begrenzenden Flächen aufgesintert werden.

Unter Gas im Sinne der vorliegenden Erfindung sind sowohl Gase und Gasgemische im eigentlichen Sinne, als auch Dämpfe sowie mit Feststoffen beladene Gase zu verstehen. Bei Flüssigkeiten kann es darauf ankommen, diese in einem oder über einen derartigen porösen Körper zu verdampfen, so daß eine katalytische Wirkung nicht erfolgt, wohl aber eine zusätzliche Wärmezufuhr über eingeformte Kanäle mit undurchlässiger Wandung.

Die Erfindung wird anhand schematischer Zeichnungen von Ausführungsbeispielen näher erläutert. Es zeigen:

Fig. 1 eine Längsschnitt durch einen Gaskanal mit eingesetzem monolithischem Körper,

Fig. 2 in größerem Maßstab eine Teilaufsicht auf das freie Ende des monolithischen Körpers, bei dem alle Kanäle in Längsrichtung durchgehen,

Fig. 3 einen Längsschnitt durch einen monolithischen Körper mit wechselweise endseitig verschlossenen Kanälen.

Fig. 4 in gleichem Maßstab eine Aufsicht auf das Stirnende eines monolithischen Körpers mit wechselweise endseitig verschlossenen Kanälen,

Fig. 5 eine Ausführungsform als zusammengesetzte Filterpatrone für einen Dieselrußfilter im Längsschnitt, mit als Rohrkörpern ausgebildeten durchlässig-porösen Körpern,

Fig. 6 eine Stirnansicht in Richtung des Pfeiles A gem. Fig. 5,

Fig. 7 eine Stirnansicht in Richtung des Pfeiles B gem. Fig. 5,

Fig. 8 die Einzelheit X in Fig. 5 in größerem Maßstab,

Fig. 9 ein Ausführungsbeispiel im Schnitt mit schichtförmig unterschiedlicher Porosität,

Fig. 10 ein Ausführungsbeispiel mit eingeformten Kanälen die undurchlässige Wandungen besitzen.

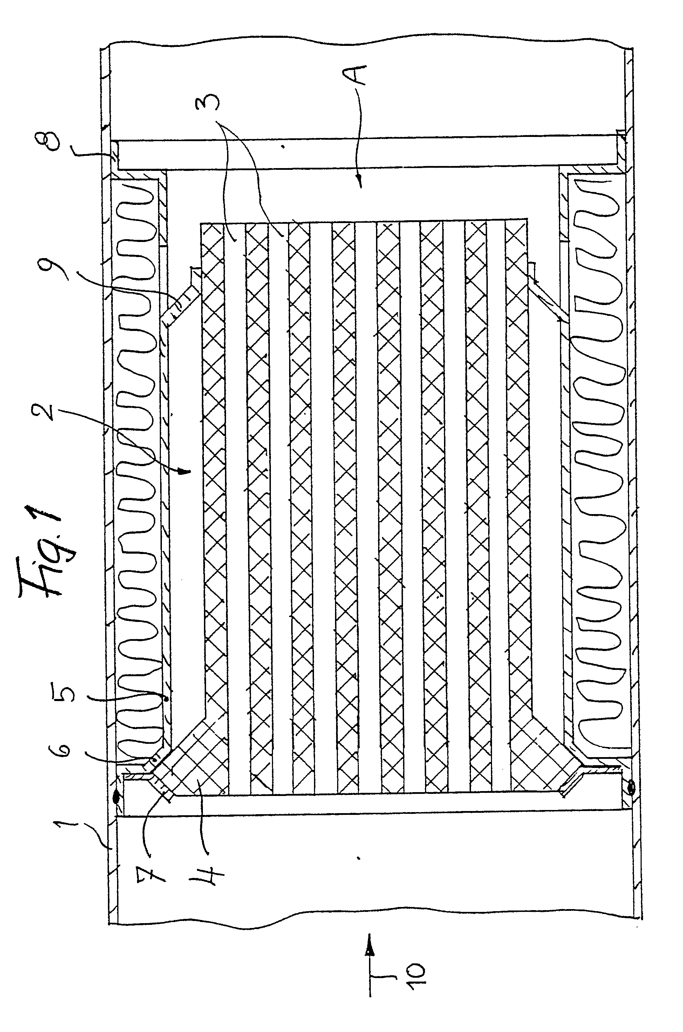

In Fig. 1 ist eine Ausführungsbeispiel gezeigt, wie es als Katalysator zur Behandlung von Gasen, beispielsweise für Abgase von Verbrennungsmotore Verwendung finden kann. Hier ist in einer Abgasleitung 1 ein monolithischer, poröser Sintermetallkörper 2 angeordnet, der eine Vielzahl parallel verlaufender, durchgehender Kanäle 3 aufweist. Der Körper 2 weist an seinem einen Ende einen außen umlaufenden Haltebund 4 auf, über den er an einem Halterohr 5 formschlüssig befestigt ist. Das Halterohr 5 weist eine entsprechend konische Aufnahme 6, in der der Haltebund 4 über einen entsprechend gegenläufig konischen Haltering 7 befestigt ist. Das Halterohr 5 ist beispielsweise durch Schweißen fest mit dem Abgasrohr 1 verbunden. Die Verbindung zwischen dem Haltering 7 und dem Halterohr 5 kann hierbei ebenfalls durch Schweißen, beispielsweise eine Punktschweißung erfolgen. Diese rein formschlüssige Befestigung hat den Vorteil, daß Wärmespannungen durch stark wechselnde Temperturunterschiede im Befestigungsbereich vermieden werden. Der Körper kann aber auch im Bereich seines Haltebundes unmittelbar mit dem Halterohr 5 verschweißt werden.

Das andere Ende 8 des Halterohres 5 ist lose im Abgasrohr 1 abgestützt. Der Körper 2 ist im Halterohr seinerseits abgestützt, beispielsweise über ausgestanzte Nasen 9, so daß sowohl das Halterohr 5 als auch der Körper 2 sich ungehindert in der Länge ausdehnen können.

Die zu behandelnden Abgase durchströmen den Körper 2 beispielsweise in Richtung des Pfeiles 10, wobei die durch die katalytischen Bestandteile des Sintermetalls und ggf. durch eine zusätzlich aufgebrachte Beschichtung mit katalytisch wirkenden Materialien, die in der Ausgangspulvermischung nicht enthalten sind, die gewünschten Umwandlungsprozesse ablaufen. Die Beschichtung ist hierbei so aufgebracht, daß die durchlässigen Poren nicht zugesetzt sind.

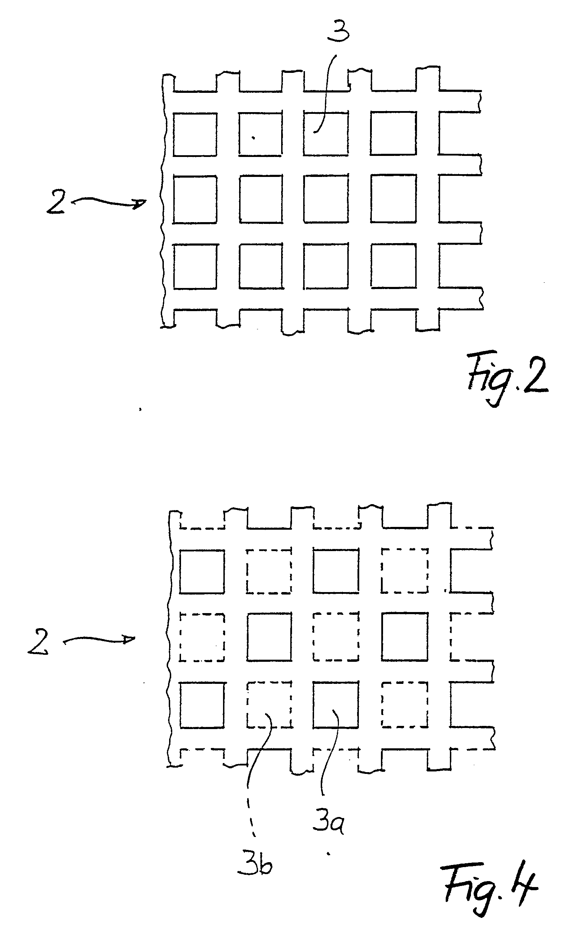

Fig. 2 zeigt in einer Stirnansicht in Richung des Pfeiles A schematisiert die Anordnung der Kanäle 3 im Körper 2.

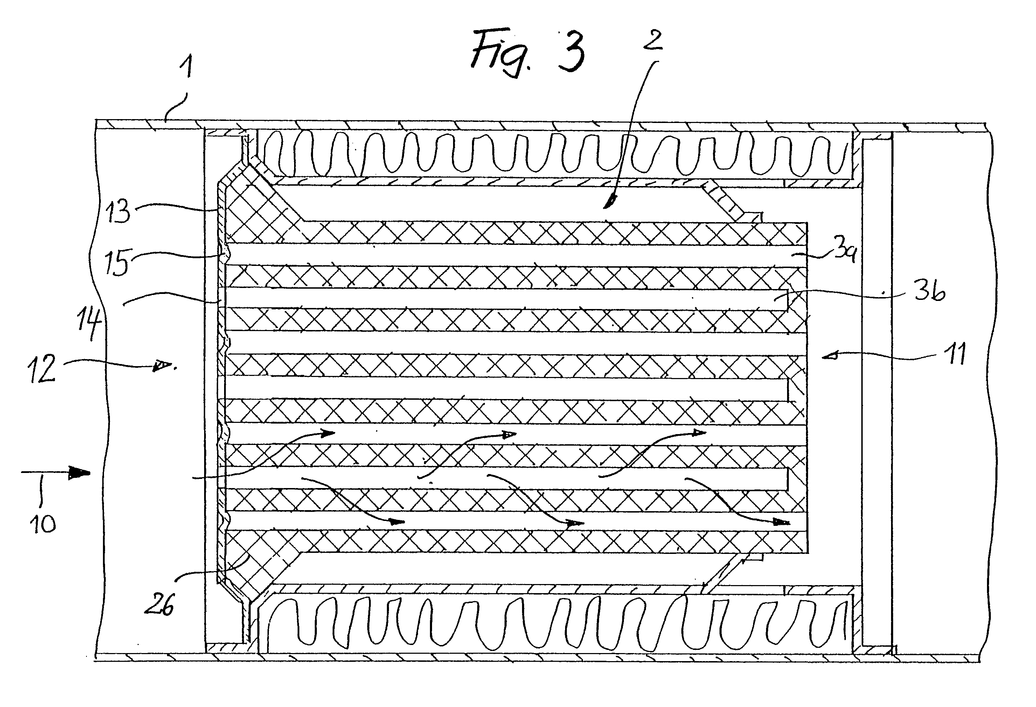

In Fig. 3 ist eine etwas abgeänderte Ausführungsform des Körpers 2 dargestellt, wie sie beispielsweise für Dieselrußfilter eingesetzt wird. Bei dieser Ausführungsform sind die Kanäle im Körper 2 nicht durchgehend angeordnet, sondern jeweils abwechselnd am einen und am anderen Körperende ver schlossen, so daß der Kanal 3a nur zu einem Ende hin offen ist und der danebenliegende Kanal 3b zum anderen Ende hin offen ist.

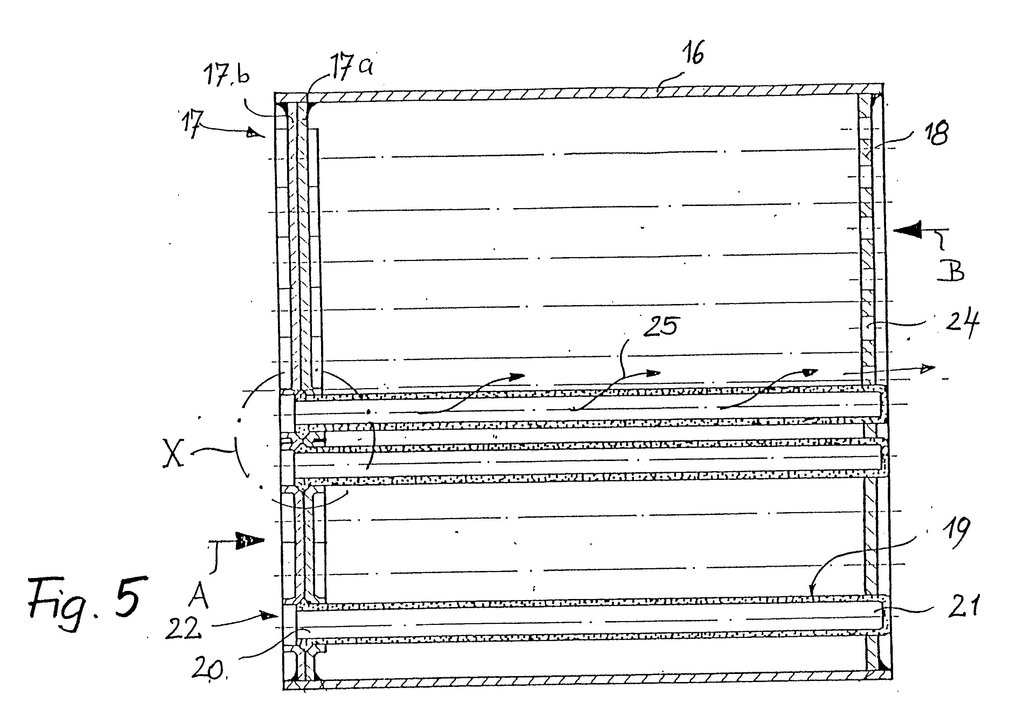

Fig. 4 zeigt vergrößert und wiederum schematisch die Stirnansicht, aus der zu erkennen ist, daß die Kanäle 3a und 3b schachbrettartig gegeneinander versetzt abwechselnd geschlossen und offen sind. Bei dem dargestellten Ausführungsbeispiel ist der Verschluß der Kanäle an dem mit dem Pfeil 11 gekennzeichneten Ende bereits bei der Herstellung des Körpers 2 gefertigt worden und zwar in der Weise, daß die in der Herstellungsform für die Formung der Kanäle 3b verwendeten Formnadeln kürzer sind als die für die Herstellung der Kanäle 3a verwendeten Formnadeln, so daß die freien Enden der Formnadeln mit Sintermaterial abgedeckt sind. Es ist aber auch möglich, ausgehend von einem Körper, wie er in Fig. 1 dargestellt ist, den erforderlichen Verschluß durch das Einsetzen von Stopfen in einem weiteren Arbeitsgang herzustellen.

An dem durch den Pfeil 12 gekennzeichneten Ende des Körpers 2 sind entsprechend die Kanäle 3a verschlossen und die Kanäle 3b offen. Bei dem dargestellten Ausführungsbeispiel erfolgt der Verschluß hier durch eine Lochplatte 13, in die entsprechende Durchlaßöffnungen 14 eingestanzt sind, so daß sich in der Stirnansicht die gleiche Konfiguration ergibt, wie in der Stirnansicht Pfeil 11, nur daß hier die Öffnungen entsprechend vertauscht sind. Die Lochplatte 13 kann im Bereich der zu verschließenden Kanäle 3a mit Ausprägungen 15 versehen sein, so daß hier der Formschluß zwischen dem Körper 2 und der gleichzeitig als Befestigungsmittel dienenden Lochplatte 13 verbessert ist.

Das beispielsweise in Richtung des Pfeiles 10 in der Abgasleitung 1 strömende Abgas tritt nun stirnseitig in die Kanäle 3b ein, durchströmt die Trennwände zwischen den einzelnen benachbarten Kanälen und verläßt den Körper über die am hinteren Ende offenen Kanäle 3a, wie dies durch die geschweiften Pfeile dargestellt ist. Beim Einsatz als Dieselrußfilter werden die in den Abgasen enthaltenen Rußteilchen jeweils auf der Innenwandung der Kanäle 3b zurückgehalten. Da sich der katalytisch wirkendes Material enthaltende Sintermetallkörper 2 durch die heißen Abgase auf eine Temperatur aufheizt, die im Bereich der durch die Katalysatoren abgesenkten Zündtemperatur für den Dieselruß liegt, erfolgt schon bei verhältnismäßig dünnen Rußschichten der Abbrand, wobei durch die infolge des Abbrandes auftretende Temperaturerhöhung sich der Abbrand der Rußablagerungen innerhalb kürzester Zeit über die gesamte Kanalfläche fortsetzt.

Wegen der hohen Prorosität eines derartigen porösen Sintermetallkörpers kann die in Fig. 3 dargestellte Ausführungsform auch als Abgaskatalysator zur Behandlung der Abgase von Otto-Motoren eingesetzt werden. Dadurch, daß die Abgase, anders als bei der Ausführungsform gem. Fig. 1, nicht nur an der Kanaloberfläche entlang strömen, sondern durch den wechselseitige Verschluß der einzelnen Kanäle auch die Trennwände durchströmen müssen, wird die Zeitdauer erhöht, in der die Abgase mit den katalytisch wirkenden Oberflächen in Berührung kommen, so daß die Schadstoffumwandlung noch verbessert wird.

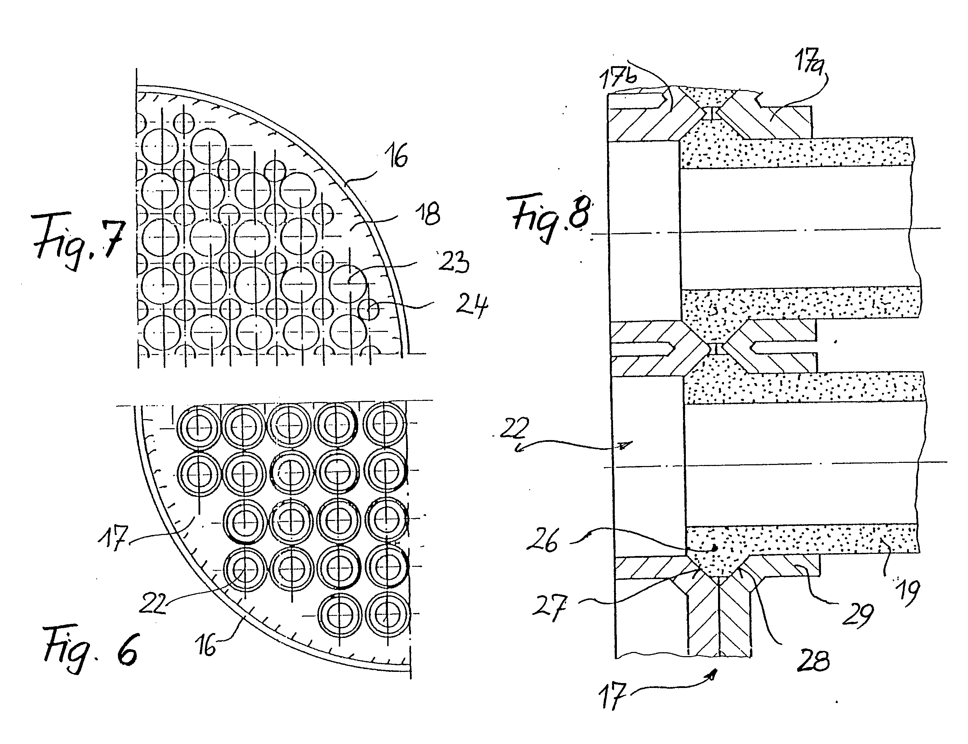

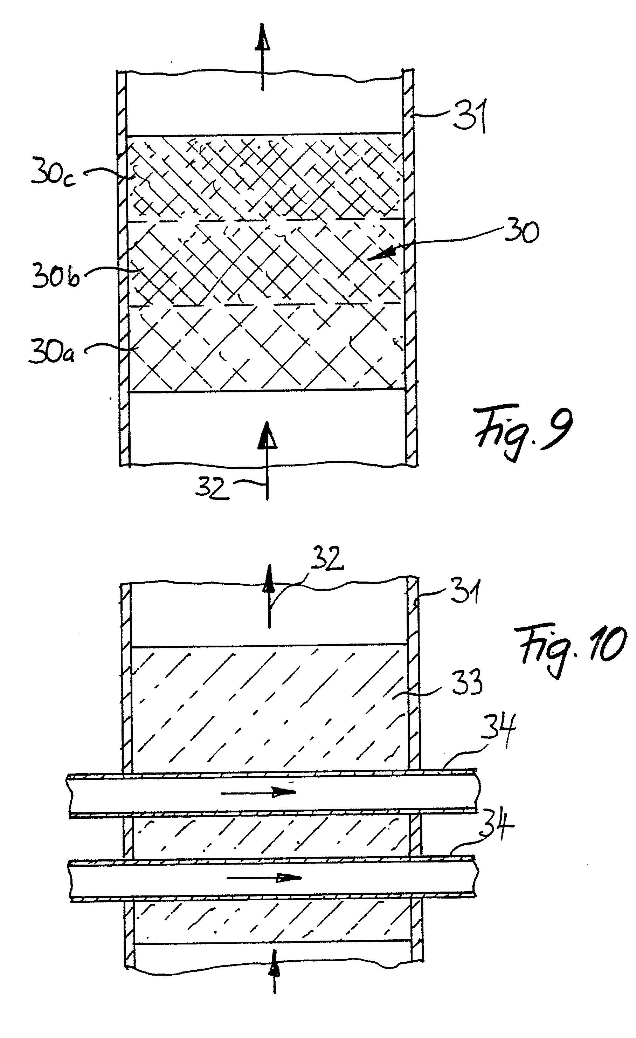

In Fig. 5 ist in einem Längsschnitt ein Ausführungsbeispiel zur Verwendung als Filterpatrone für einen Dieselrußfilter dargestellt, die in einen entsprechend erweiterten Teil einer Abgasleitung eines Dieselmotors eingesetzt wird. Die Filterpatrone besteht im wesentlichen aus einem Strömungsführungsgehäuse 16, das im Querschnitt zylindrisch - wie hier dargestellt - oder auch in anderer Querschnittsform, beispielsweise oval, ausgebildet sein kann. Die eine Stirnseite ist durch eine Gehäusezwischenwand 17 und die andere Stirnseite durch eine Gehäusezwischenwand 18 abgeschlossen, die in entsprechenden Öffnungen eine Vielzahl parallel verlaufender Rohrkörper 19 aus einem porösen Sintermetall tragen. Die Rohrkörper 19 sind an einem Ende 20 offen und am anderen Ende 21 verschlossen. Die Zwischenwand 17 ist hierbei mit Gasdurchlaßöffnungen 22 versehen, die identisch mit den Öffnungen der Rohrkörper 19 sind, wie dies aus der Stirnansicht gem. Fig. 6 und 7 ersichtlich ist. Die Gehäusezwischenwand 18 ist mit Durchtrittsöffnungen 23 versehen, durch die das Ende 21 der Rohrkörper 19 hindurchgesteckt ist, und in den verbleibenden Zwischenräumen mit Gasdurchlaßöffnungen 24 versehen.

Die in Fig. 5 dargestellte Filterpatrone kann nun sowohl aus de Richtung des Pfeiles A wie auch aus der Richtung des Pfeiles B von Abgasen durchströmt werden. Bei einer Durchströmung in Richtung des Pfeiles A treten die Abgase in den Innenraum der Rohrkörper 19 ein und durchströmen, wie mit den Pfeilen 25 angedeutet, die porösen Wandungen der Rohrkörper und treten durch die Gasdurchlaßöffnungen 24 in die anschließende, nicht näher dargestellte Abgasleitung ein. Der Filterkörper kann aber auch von der anderen Seite her durchströmt werden, so daß hier sich eine entsprechend umgekehrte Durchströmung ergibt.

Die Rohrkörper 19 werden nun in den Zwischenwänden so festgelegt, daß ein Rohrende fest mit einer Gehäusezwischenwand verbunden ist und das andere Rohrende frei verschiebbar in einer entsprechenden Öffnung gehalten ist. Die Befestigung kann beispielsweise über eine Verschweißung des betreffenden Rohrendes erfolgen. Bei dem dargestellten Ausführungsbeispiel ist jedoch eine besonders vorteilhafte formschlüssige Verbindung gewählt. Wie Fig. 8 zeigt, ist zu diesem Zweck an jedem Rohrkörper 19 im Bereich seines offenen Endes ein umlaufender Haltebund 26 angeformt, dessen beide Stirnseiten 27, 28 konisch zulaufend geformt sind. Die Gehäusezwischenwand 17 ist hierbei zweiteilig ausgebildet. Jeder Wandteil wird beispielsweise durch einen Stanzvorgang hergestellt, bei dem in einem Arbeitsgang die Löcher mit ihren konischen Anlageflächen für die Stirnflächen 27, 28 des Haltebundes 26 und ein anschließender Kragen 29 hergestellt werden. Beide Wandteile sind identisch, so daß zunächst der Wandteil 17a mit dem Gehäuse 16 beispielsweise durch Verschweißen verbunden werden kann und anschließend die Gehäusezwischenwand 18 ebenfalls mit dem Gehäuse verbunden wird. Anschließend werden die Rohrkörper 19 in Richtung des Pfeiles A eingeschoben, der Wandteil 17b aufgesetzt, hierbei die konische Stirnfläche 27 zentriert, und dann mit dem Gehäuse 16 verschweißt.

Zur Erhöhung der Widerstandsfähigkeit der Anordnung gegen Beschädigung durch Erschütterung kann ergänzend noch eine zusätzliche, hier nicht näher dargestellte Zwischenwand in Form der Gehäusezwischenwand 18 vorgesehen werden, die zwischen den Zwischenwänden 17 und 18 im Gehäuse angeordnet ist.

Da die Oberfläche der Rohrkörper 19 verhältnismäßig rauh ist, ragen Rauhigkeitsspitzen durch die sich bildende Rußschicht hindurch, so daß trotz der wärmeisolierenden Wirkung der Rußschicht aus dem Abgasstrom Wärme in den Rohrkörper eingeleitet und so die Zündtemperatur frühzeitig erreicht wird. Der Abbrand erfolgt somit schon bei einer dünnen Ablagerung und daher häufiger und insgesamt gleichmäßiger.

Die schematische Darstellung in Fig. 9 zeigt einen durchlässig-porös ausgebildeten monolithischen Sintermetallkörper 30, der in einem Strömungskanal 31 angeordnet ist. Bei dem dargestellten Ausführungsbeispiel ist der Körper 30 so zusammengesetzt, daß er in bezug auf das zu behandelnde Gas katalytisch wirkende Bestandteile enthält, die in einer der eingangs näher erläuterten Herstellungsweise in den Körper eingebracht sind. Die geometrische Form des Sintermetallkörpers 30 richtet sich nach den verfahrenstechnischen Gegebenheiten, die hier nicht näher zu berücksichtigen sind. Bei dem dargestellten Ausführungsbeispiel ist der Körper dreischichtig aufgebaut, wobei, bezogen auf die Strömungsrichrung (Pfeil 32), die erste Schicht 30a eine hohe Porosität, die zweite Schicht 30b eine demgegenüber geringere Porosität und eine dritte Schicht 30c mit demgegenüber wiederum verminderter Porosität. Da diese drei Schichten durch den vorstehend beschriebenen Schießvorgang nacheinander mit entsprechend abgestimmten Metallpulvermischungen zusammengebracht werden und der so entstandene dreischichtige Formling dann dem Sinterprozeß unterworfen wird, ist gewährleistet, daß die drei Schichten fest zusammensintern und somit ein feste monolithischer Körper mit einer entsprechenden gradierten Porenstruktur zur Verfügung steht. Ein derartiger schichtweiser Aufbau kann beispielsweise auch für Körper verwendet werden, wie sie in Fig. 1 und Fig. 5 dargestellt und beschrieben sind.

Bei dem Ausführungsbeispiel in Fig. 10 ist in schematischer Weise ein durchlässig-poröser Sintermetallblock 33 dargestellt, in den Kanäle 34 mit undurchlässiger Wandung eingeformt sind. Setzt man beispielsweise einen derart ausgebildeten Block wiederum in einen Strömungskanal 31 ein, so besteht hier die Möglichkeit, durch die Kanäle 34 mit undurchlässigen Wandungen einen strömungsfähigen Wärmeträger zu leiten, der je nach dem durchzuführenden Prozeß Wärme zuführt oder Wärme abführt, so daß unter Ausnutzung der guten Wärmeleitfähigkeit eines Sintermetallkörpers bei entsprechender Verteilung derartiger Kanäle über den gesamten Querschnitt eine gleichmäßige Temperaturverteilung erzielt werden kann. In bezug auf den durchzuführenden Behandlungsprozeß können die Kanäle 34 gezielt in die Bereiche des Sintermetallkörpers 33 eingeformt werden, die eine gezielte Zufuhr oder Abfuhr von Wärme benötigen.

Durch das eingangs ausführlich beschriebene Herstellungsverfahren, bei dem eine mit Kunstharzflüssigkeit als Bindemittel versetzte Metallpulvermischung in einer Form eingeschossen wird, ist man nicht gezwungen, gerade geformte und/oder glattflächig geformte Kanäle 34 vorzusehen. Das Verfahren erlaubt es vielmehr, auch andersartige Kanalverläufe, beispielsweise in Form von Rohrschlangen oder dergl., gerippte Rohre oder ähnl. einzusetzen. Die Formgebung und Positionierung innerhalb der Herstellungsform muß lediglich so vorgenommen werden, daß eine gleichmäßige Füllung der Herstellungsform beim Schießvorgang gewährleistet ist. Es werden bevorzugt Rohre aus Metall verwendet, wobei hier Metalle eingesetzt werden müssen, die der Sintertemperatur standhalten. Anstelle von Rohren können auch andere Körper auf diese Weise in den porösen Sinterkörper eingeformt werden. So beispielsweise stabförmige elektrische Heizleiter oder auch nur bolzenförmige Befestigungsmittel, die die Außenfläche des Sinterkörpers überragen.

## Ansprüche

1. Körper aus einem porösen Werkstoff zur Behandlung von den Körper durchströmenden Gasen und/oder Dämpfen und/oder Flüssigkeiten, **dadurch gekennzeichnet,** daß der durchströmungsfähige Teil des Körpers (2; 19; 30) aus einem durchlässig-porösen Sintermetall besteht.

2. Körper nach Anspruch 1, dadurch gekennzeichnet, daß die Porosität des Körpers zwichen 20 und 80% liegt.

3. Körper nach Anspruch 2, dadurch gekennzeichnet, daß die Porosität zwischen 40 und 60% liegt.

4. Körper nach Anspruch 1 und 2, insbesondere zur Behandlung feststoffhaltiger Gase, dadurch gekennzeichnet, daß die Porosität, bezogen auf die Strömungsrichtung des zu behandelnden Gases, eintrittsseitig anders ist als austrittsseitig.

5. Körper nach Anspruch 4, dadurch gekennzeichnet, daß der Körper (2; 19; 30) aus wenigstens zwei fest zusammengesinterten Schichten (30a, b, c) unterschiedlicher Porosität zusammengesetzt ist, so daß sich die Porosität stufenweise ändert.

6. Körper nach den Ansprüchen 1 bis 5, dadurch gekennzeichnet, daß das durchlässig-poröse Sintermetall zumindest zum Teil aus katalytisch wirkenden Materialien zusammengesetzt ist.

7. Körper nach Anspruch 6, dadurch gekennzeichnet, daß die katalytisch wirkenden Materialien jeweils auf das die Porenkanäle begrenzenden Grundmaterial aufgedampft ist.

8. Körper nach Anspruch 6, dadurch gekennzeichnet, daß die katalytisch wirkenden Materialien jeweils auf das die Porenkanäle begrenzenden Grundmaterial aufgesintert ist.

9. Körper nach den Ansprüchen 1 bis 8, dadurch gekennzeichnet, daß der Körper als monolithischer Körper (2; 33) ausgebildet ist und mehrere den Körper vorzugsweise parallel zueinander, durchlaufende Kanäle (3) aufweist.

10. Körper nach Anspruch 9, dadurch gekennzeichnet, daß zumindest die Wände der Kanäle (3) zusätzlich mit einer Beschichtung aus katalytisch wirkenden Materialien versehen sind.

11. Körper nach Anspruch 1 oder 10, dadurch gekennzeichnet, daß die Breite der vorzugsweise einen quadratischen Querschnitt aufweisenden Kanäle mindestens etwa der Wandstärke der jeweils zwei benachbarte Kanäle (3) trennenden Zwischenwände beträgt.

12. Körper nach den Ansprüchen 1 bis 11, dadurch gekennzeichnet, daß in dem aus durchlässig-porösem Sintermetall bestehenden Teil des Körpers (33) wenigstens ein Kanal (34) mit undurchlässiger Wandung angeordnet ist.

13. Körper nach einem der Ansprüche 1 bis 12, bei dem die Kanäle (3a, 3b) jeweils abwechselnd an einem Kanalende offen und am anderen Kanalende verschlossen sind, dadurch gekennzeichnet, daß der Verschluß des einen Teils der Kanäle (3b) durch eine angeformte, die Kanalenden bildende Stirnwand und des anderen Teils der Kanäle (3a) am anderen Ende durch eine vorgesetzte Lochplatte (13) bewirkt wird.

14. Körper nach einem der Ansprüche 1 bis 13, dadurch gekennzeichnet, daß die Lochplatte (13) aus eine gestanzten Blechplatte besteht, bei der die den Verschluß bildenden Bereiche jeweils durch eine in die zugehörige Kanalöffnung eingreifende Ausprägung (15) gebildet wird.

15. Körper nach einem der Ansprüche 1 bis 14, dadurch gekennzeichnet, daß das mit dem Gehäuse fest zu verbindende Ende des Körpers (2) einen angeformten, umlaufenden Haltebund (4) aufweist.

16. Körper nach einem der Ansprüche 1 bis 15, dadurch gekennzeichnet, daß der Körper über seinen Haltebund (4) durch einen entsprechenden Andruckring (7) an der zugehörigen Gehäusewand festgelegt ist.

17. Körper nach den Ansprüchen 1 bis 16, gekennzeichnet durch wenigstens einen, an einem Ende (21) geschlossenen Rohrkörper (19), der in Strömungsrichtung ausgerichtet, in einem Strömungsführungsgehäuse (16) angeordnet ist.

18. Körper nach Anspruch 17, dadurch gekennzeichnet, daß der einzelne Rohrkörper (19) mit wenigstens einem Ende, vorzugsweise mit beiden Enden (20, 21) in Gehäusewandungen (17, 18) befestigt sind.

19. Körper nach Anspruch 17 oder 18, dadurch gekennzeichnet, daß der Rohrkörper (19) jeweils mit einem Ende, vorzugsweise dem offenen Ende (20) starr an einer Gehäusewandung (17) und mit dem anderen Ende (21) verschiebbar an der anderen Gehäusewandung (18) gehalten sind.

20. Körper nach einem der Ansprüche 17 bis 19, dadurch gekennzeichnet, daß der Rohrkörper (19) mit seinem offenen Ende (20) in einer Gehäusezwischenwand (17) gehalten ist, in der nur die Rohröffnung Abgasdurchlaß (22) bildet.

21. Körper nach einem der Ansprüche 17 bis 20, dadurch gekennzeichnet, daß der Rohrkörper (19) im Bereich seines geschlossenen Endes (21) in zumindest einer weiteren Zwischenwand (18) gehalten ist, die Durchstecköffnungen (23) für den Rohrkörper und zusätzliche Abgasdurchlaßöffnungen (24) aufweist.

22. Körper nach einem der Ansprüche 1 bis 21, dadurch gekennzeichnet, daß das mit dem Gehäuse (16) fest zu verbindende Ende des Rohrkörpers (2; 19) einen angeformten, umlaufenden Haltebund (26) aufweist.

23. Körper nach Anspruch 1 - 22, dadurch gekennzeichnet, daß zumindest eine Stirnfläche (27, 28) des Haltebundes (26) konisch zulaufend geformt ist.

24. Körper nach Anspruch 1 bis 23, dadurch gekennzeichnet, daß der Rohrkörper (19) über seinen Haltebund (26) formschlüssig in Aufnahmen (22) der Gehäuse (1; 16) festgelegt ist.

25. Körper nach einem der Ansprüche 1 bis 24, dadurch gekennzeichnet, daß der Rohrkörper (2; 19) über seinen Haltebund (26) durch eine mit entsprechenden Öffnungen versehene Andruckplatte (13; 17b) am Gehäuse festgelegt ist.

26. Körper nach einem der Ansprüche 1 bis 25, dadurch gekennzeichnet, daß die Außenfläche des Rohrkörpers (2; 19) an mindestens einem Ende durch einen Rolliervorgang geglättet ist.

27. Körper nach einem der Ansprüche 1 bis 26, dadurch gekennzeichnet, daß wenigstens ein Ende, vorzugsweise das mit dem Haltebund (26) versehene Ende des Rohrkörpers (2; 19) eine andere, auf erhöhte Festigkeit abgestellte Materialzusammensetzung besitzt.

28. Körper nach einem der Ansprüche 1 bis 27, dadurch gekennzeichnet, daß der Körper (30) aus wenigstens zwei zusammengesinterten Teilkörpern (30a, 30b, 30c) mit unterschiedlicher Porosität besteht.

29. Verfahren zur Herstellung eines Körpers aus einem durchlässig-porösen Material mit wenigstens einem innerhalb des Körpers verlaufenden Kanal, nach einem der Ansprüche 1 bis 28, dadurch gekennzeichnet, daß in eine der Außenkontur des Körpers entsprechende Form, deren Innenwandung mit den zu formenden Kanälen entsprechenden Formelementen versehen ist, durch eine Öffnung eine schüttfähige Metallpulvermischung mit einem Kornspektrum zwischen 50 und 500µ, vermischt mit max. 2% phenolhaltigem Kunstharz, mittels Druckluft eingeblasen, vorzugsweise eingeschossen wird, daß anschließend die gefüllte Form mit einem katalytisch wirkenden Mittel zum Aushärten des Kunstharzes versetzt wird und danach der Formling ausgeformt und gesintert wird.

30. Verfahren, insbesondere nach Anspruch 29, zur Herstellung eines Körpers aus einem durchlässig-porösen Material mit katalytischen Eigenschaften, dadurch gekennzeichnet, daß die katalytisch wirkenden Bestandteile dem als Bindemittel der Metallpulvermischung zugemischten phenolhaltigen Kunstharz vor dem Einbringen in die Metallpulvermischung zugemischt werden.

31. Verfahren nach Anspruch 29 oder 30, dadurch gekennzeichnet, daß der die Kanäle formende Formkörper vorzugsweise als Rohr ausgebildet und lösbar mit der Form verbunden ist und nach dem Aushärten des Kunstharzes zusammen mit dem Formling aus der Form herausgenommen und in diesen durch das Sintern eingebunden wird.

Fig.1

EP 0 410 200 A1

Fig.2

3a

3b

Fig.4

Fig. 3

Fig. 5

Fig. 7

Fig. 8

Fig. 6

EP 0 410 200 A1

Fig. 9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 536 276 (SINTERMETALLWERK KREBSÖGE GmbH)<br>* Ansprüche 1-5 *<br>– – – | 1,4,5 | B 01 D 53/36<br>F 01 N 3/28<br>B 01 J 35/04<br>B 01 D 46/24 |
| X | DE-A-2 155 955 (SINTERMETALLWERK KREBSÖGE GmbH)<br>* Seite 1, Absatz 1 *<br>– – – | 1,9 | |
| X | DE-A-2 165 839 (Fa. Dr. EUGEN DÜRRWÄCHTER DODUCO)<br>* Ansprüche 1-3 *<br>– – – | 1,6,8 | |
| X | US-A-4 582 677 (M. SUGINO)<br>* Das ganze Dokument *<br>– – – | 1,6,8,9 | |
| A | US-A-4 416 675 (M.R. MONTIERTH)<br>* Figures 2,4 *<br>– – – – – | 13,17,18, 19 | |

| RECHERCHIERTE SACHGEBIETE (Int. Cl.5) |
|---|
| B 01 D<br>F 01 N<br>B 01 J |

Der vorliegende Recherchenbericht wurde für alle Patentansprüche erstellt

| Recherchenort | Abschlußdatum der Recherche | Prüfer |
|---|---|---|
| Den Haag | 13 November 90 | POLESAK, H.F. |